# DEMANDE DE BREVET EUROPEEN

(11) **EP 3 995 235 A1**
(43) Date de publication de la demande: **11.05.2022**
(21) Numéro de dépôt: 21203759.2
(22) Date de dépôt: 20.10.2021
(51) Int. Cl.: B22F 10/20, B33Y 70/10, C22C 1/04, C22C 21/00

(54) **PROCEDE DE FABRICATION D'UNE PIECE EN ALLIAGE D'ALUMINIUM PAR FABRICATION ADDITIVE A PARTIR D'UN MELANGE DE POUDRES CONTENANT DES PARTICULES DE ZRSI2**

(30) Priorité: 10.11.2020 FR 2011559
(71) Demandeur: Commissariat à l'énergie atomique et aux énergies alternatives, 75015 Paris (FR)
(72) Inventeur: OPPRECHT, Mathieu, 38054 GRENOBLE CEDEX 09 (FR); GARANDET, Jean-Paul, 38054 GRENOBLE CEDEX 09 (FR); ROUX, Guilhem, 38054 GRENOBLE CEDEX 09 (FR)
(74) Mandataire: Brevalex

(57) **Abrégé**

Procédé de fabrication d'une pièce en alliage d'aluminium par fabrication additive comprenant une étape au cours de laquelle une couche d'un mélange de poudres est localement fondue puis solidifiée, caractérisé en ce que le mélange de poudres comprend :
- des premières particules (10) comprenant au moins 80% massique d'aluminium et jusqu'à 20% massique d'un ou plusieurs éléments additionnels, et
- des deuxièmes particules (20) en ZrSi₂,
le mélange de poudres comprenant de 1,8% à 4% massique de deuxièmes particules.

## Description

### DOMAINE TECHNIQUE

La présente invention se rapporte au domaine général de la fabrication de pièce en alliage d'aluminium par fabrication additive.

L'invention concerne un procédé de fabrication de pièces en alliage d'aluminium.

L'invention concerne également une pièce en alliage d'aluminium obtenue avec ce procédé.

L'invention est particulièrement intéressante puisqu'elle permet de remédier aux problèmes de fissuration à chaud des alliages d'aluminium dans les procédés de fabrication additive impliquant une fusion.

L'invention trouve des applications dans de nombreux domaines industriels, et notamment dans les domaines de l'automobile et de l'aéronautique ou encore pour le renforcement structural d'alliage d'aluminium.

### ÉTAT DE LA TECHNIQUE ANTÉRIEURE

Les différents procédés de fabrication de pièces en alliage métallique par fabrication additive (aussi appelée impression 3D) ont pour point commun d'utiliser la matière première sous forme de poudres et de mettre en forme l'alliage métallique via une étape de fusion de ces poudres.

Les différents procédés de fabrication additive concernés incluent, en particulier et de manière non exhaustive, les procédés de fusion sur lit de poudre (ou PBF pour « Powder Bed Fusion » en terminologie anglo-saxonne) et les procédés de dépôt de matière sous énergie concentrée (ou DED pour « Directed Energy Déposition » en terminologie anglo-saxonne).

Les procédés PBF consistent à faire fondre certaines régions d'un lit de poudre, par exemple au moyen d'un faisceau laser. Les procédés DED consistent à amener le matériau solide, par exemple sous forme de fil ou de poudre, de le faire fondre, par exemple au moyen d'un faisceau laser, et de déposer le matériau fondu.

Avec de tels procédés, il est possible de produire industriellement des pièces, de forme simple ou complexe, ayant des propriétés mécaniques satisfaisantes.

Cependant, certains alliages d'aluminium sont sujets à des problèmes de fissuration à chaud résultants d'une solidification dendritique colonnaire, à l'origine d'une microstructure sensible aux contraintes thermomécaniques pendant la solidification, notamment pour une fraction solide proche de l'unité, typiquement allant de 0,9 à 0,98.

Pour remédier à cet inconvénient, différentes solutions ont été envisagées.

Par exemple, il est possible de modifier la composition chimique de l'alliage de la poudre, comme c'est par exemple le cas du Scamalloy. Il s'agit d'un alliage léger comprenant de l'aluminium, du magnésium et du scandium, développé spécifiquement pour la fabrication additive. Au cours de la solidification, des particules primaires Al₃Sc précipitent à partir du liquide et actent comme des germes pour la croissance de grain de la matrice Al. Le Scandium permet donc un raffinement de la microstructure et le développement d'une solidification dendritique équiaxe. Cependant, le Scandium est un élément particulièrement cher, ce qui augmente considérablement les coûts de la matière première.

Une autre solution consiste à ajouter à la poudre d'aluminium des nanoparticules d'un matériau dit germinant, moins cher que le scandium, pour promouvoir une solidification équiaxe.

Par exemple, dans le document WO 2018/144323 A1, des poudres en alliage d'aluminium sont mélangées avec des nanoparticules en Zr, Ta, Nb, Ti ou encore en un des leurs oxydes, nitrures, hydrures, borures, carbures et aluminures pour fabriquer des pièces en alliage d'aluminium par fabrication additive. Parmi les différents exemples de réalisation décrits, des pièces sont fabriquées par fusion sélective par laser (aussi notée SLM) à partir, par exemple, d'un mélange comprenant :
- de l'aluminium et des nanoparticules de tantale de 50nm de diamètre (1% volumique), ou
- un alliage d'aluminium (Al7075 ou Al6061) et des nanoparticules de zirconium de 500-1500nm de diamètre (1% volumique).

Dans l'article de Martin et al. ("3D printing of high-strength aluminium alloys", Nature 549 (2017), pages 365-369), des poudres d'alliages d'aluminium de séries 7075 (distribution bimodale à 15µm et 45µm) et 6061 (d₅₀ de 45µm) ont été mélangées avec 1% volumique de nanoparticules de Zirconium stabilisées à l'hydrogène (ZrH₂) pour remédier au problème de fissuration à chaud des alliages d'aluminium obtenu par SLM. Les nanoparticules sont électrostatiquement assemblées sur la poudre de base pour obtenir une répartition uniforme. Aucune information n'est donnée sur la granulométrie des nanoparticules utilisées.

Finalement, dans l'article de Opprecht et al. ("A solution to the hot cracking problem for aluminium alloys manufactured by laser beam melting", Acta Materialia 197 (2020), 40-53), des pièces en alliage d'aluminium 6061 sont obtenues par fabrication additive. L'ajout de 2% volumique de particules de Zircone Yttriée (YSZ) à des particules d'alliage d'aluminium 6061 permet de raffiner l'alliage 6061 et de complètement supprimer les fissures. Le processus de raffinement semble se dérouler selon les étapes suivantes : dissolution des particules d'YSZ (libération d'O et de Zr), précipitation d'oxydes Al/Mg, germination de Al₃Zr sur les oxydes Al/Mg puis germination et croissance de la phase d'aluminium sur Al₃Zr. La présence d'oxygène est importante pour la germination de l'Al₃Zr qui a lieu sur les oxydes d'aluminium et/ou de magnésium.

Les particules d'Al₃Zr formées lors du procédé sont responsables du raffinement de la microstructure. Leur pouvoir germinant est dû, principalement, à leur proximité cristallographique avec l'aluminium (Wang et al. "Crystallographic study of Al3Zr and Al3Nb as grain refiners for Al alloys", Transactions of Nonferrous Metals Society of China 24 (2014), 2034-2040).

Cependant, l'utilisation de particules de zircone yttriée conduit à l'augmentation de la teneur en oxygène dans les pièces fabriquées, ce qui n'est pas *a priori* favorable pour les propriétés d'usage de ces alliages. En particulier l'oxygène conduit à la formation d'oxydes (Al₂O₃ par exemple), qui sont connus pour diminuer les propriétés mécaniques des pièces.

### EXPOSE DE l'INVENTION

Un but de la présente invention est de proposer un procédé de fabrication de pièces en alliages d'aluminium ne présentant pas de fissure, le procédé devant être simple à mettre en oeuvre et bon marché.

Pour cela, la présente invention propose un procédé de fabrication d'une pièce en alliage d'aluminium par fabrication additive comprenant au moins une étape au cours de laquelle une couche d'un mélange de poudres est fondue puis solidifiée,
le mélange de poudres comprenant :
   - des premières particules comprenant au moins 80% massique d'aluminium et jusqu'à 20% massique d'un ou plusieurs éléments additionnels, et
   - des deuxièmes particules en ZrSi₂,
le mélange de poudres comprenant au moins 1,5% massique de deuxièmes particules.

L'invention se distingue fondamentalement de l'art antérieur par l'adjonction de particules de disiliciure de zirconium à la poudre à base d'aluminium. L'adjonction de telles particules permet de favoriser une structure de solidification équiaxe et ainsi éliminer la fissuration dans la pièce finale.

Contre toute attente les inventeurs ont constaté que des particules d'Al₃Zr germinent sur des oxydes Al/Mg, sans apport supplémentaire d'oxygène au travers des particules de ZrSi₂. En effet, l'utilisation de ZrSi₂ prive le procédé d'une source d'oxygène, par rapport à l'utilisation de zircone yttriée. Or l'oxygène est important pour la germination de l'Al₃Zr qui a lieu sur les oxydes d'aluminium et/ou de magnésium.

De plus, contre toute attente, les particules de ZrSi₂ donnent naissance à des particules germinantes d'Al₃Zr par réaction avec l'aluminium selon les réactions (1) et (2) suivantes :

ZrSi₂ → Zr+2Si (1)

3Al+Zr→ Al₃Zr (2)

En effet, les données thermodynamiques pour la réaction (1) montrent qu'elle n'est pas favorisée. A 1300K, son ΔG est largement positif et vaut 1,77eV selon les données de [1] référencé à la fin de la description. La phase ZrSi₂ est plus stable que les éléments dissociés.

Il est à noter que le ΔG de formation de la phase Al₃Zr (-0.43eV [2] est moins important que celui de ZrSi₂ (-1.77 eV [1]) à 1300K. Autrement dit, l'élément Zr a plus de chance *a priori* de rester avec l'élément Si que de se dissocier pour former de l'Al₃Zr.

Néanmoins, les inventeurs ont observé que, au cours du procédé de fabrication additive, on forme la phase germinante Al₃Zr par décomposition de ZrSi₂.

Il ne paraissait pas non plus évident que cette phase Al₃Zr (réaction (2)) ait le temps de germer puisque les durées de vie des bains de métaux fondus, formés lors du procédé, sont relativement courts (de la centaine de microsecondes à la milliseconde) alors qu'un temps d'incubation de plusieurs dizaine de minutes, voire se comptant en heures est généralement utilisé en fonderie pour faire croitre de telles particules ([3]). A première vue, cette réaction de formation *in situ* de particules germinantes Al₃Zr à partir de ZrSi₂ n'est ni thermodynamiquement ni cinétiquement favorisée par les conditions thermiques imposées par le procédé.

Avantageusement, le mélange de poudres comprend de 1,9% à 2,5% massique de deuxièmes particules. Autrement dit, le mélange de poudres comprend de 1,9% à 2,5% massique de deuxièmes particules et de 97,5% à 98,1% massique de premières particules.

Avantageusement, les deuxièmes particules ont une plus grande dimension allant de 50nm à 5000nm.

De manière encore plus avantageuse, les deuxièmes particules ont une plus grande dimension allant de 100nm à 1000nm, et encore plus préférentiellement de 400 nm à 600nm.

Avantageusement, les premières particules ont une plus grande dimension allant de 10µm à 120µm, et de préférence de 20µm à 65µm.

Avantageusement, les éléments additionnels sont choisis parmi Cu, Si, Zn, Mg, Fe, Ti, Mn, Zr, Va, Ni, Pb, Bi et Cr.

Avantageusement, l'alliage d'aluminium est l'alliage 7075, l'alliage 6061, l'alliage 2219 ou l'alliage 2024.

Selon une première variante de réalisation avantageuse, le procédé de fabrication est un procédé de fusion sélective par laser.

Selon une deuxième variante de réalisation avantageuse, le procédé de fabrication est un procédé de fusion sélective par faisceau d'électrons.

Avantageusement, le mélange de poudres est réalisé dans un mélangeur dynamique 3D.

Le procédé présente de nombreux avantages :
- être simple à mettre en oeuvre, puisqu'il suffit de mélanger des poudres. Il s'agit d'une étape par voie sèche, rapide à réaliser et simple à mettre en place, quelle que soit la quantité de poudres,
- être peu coûteux, et donc intéressant d'un point de vue industriel. A titre illustratif, le coût matière d'un alliage d'aluminium 6061 est d'environ 60€/kg et le coût matière d'un mélange de poudres comprenant l'alliage d'aluminium 6061 et ZrSi₂ (1,9% massique) est d'environ 68 €/kg; les oxydes de tantale et ZrH₂ sont significativement plus cher que ZrSi₂ (au moins 3 fois plus cher),
- pouvoir stocker/manipuler facilement la poudre de ZrSi₂,
- l'absence d'apport d'oxygène lors de l'ajout de ZrSi₂, ce qui limite la présence d'oxydes dans l'alliage final,
- pouvoir facilement modifier le rapport massique entre les poudres au moment du mélange de poudre
- être facilement adaptable pour tout procédé de fabrication additive et pour tout alliage d'aluminium (sujet au problème de fissuration à chaud),
- permettre de raffiner la microstructure des alliages d'aluminium et ainsi de limiter l'anisotropie des pièces obtenues par fabrication additive,
- augmenter les propriétés mécaniques des pièces obtenues (renforcement structural par les particules non transformées),
- pouvoir utiliser les paramètres classiquement utilisés dans les procédés de fabrication additive.

L'invention concerne également une pièce en alliage d'aluminium, obtenue selon le procédé précédemment décrit, la pièce comprenant du ZrSi₂. La pièce est dépourvue de fissuration/fissure.

D'autres caractéristiques et avantages de l'invention ressortiront du complément de description qui suit.

Il va de soi que ce complément de description n'est donné qu'à titre d'illustration de l'objet de l'invention et ne doit en aucun cas être interprété comme une limitation de cet objet.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :
[Fig. 1] est un cliché obtenu au microscope électronique à balayage (MEB) de particules en alliage d'aluminium 6061.
[Fig. 2] est un cliché obtenu au microscope électronique à balayage (MEB) de particules d'aluminium et de particules de ZrSi₂ à 1,9% massique selon un mode de réalisation particulier de l'invention.
[Fig. 3] est un cliché obtenu au microscope optique selon le plan YZ (Z étant l'axe de construction et Y l'axe perpendiculaire au déplacement du laser dans le plan horizontal) d'une pièce fabriquée à partir de particules d'un alliage d'aluminium 6061.
[Fig. 4] est un cliché obtenu au microscope optique selon le plan YZ d'une pièce fabriquée à partir d'un mélange de particules d'un alliage d'aluminium 6061 et de particules de ZrSi₂ à 1,9% massique selon un mode de réalisation particulier de l'invention.
[Fig. 5] est une image en diffraction d'électrons rétrodiffusés (EBSD) selon le plan YZ d'une pièce fabriquée à partir de particules d'un alliage d'aluminium 6061.
[Fig. 6] est une image en diffraction d'électrons rétrodiffusés (EBSD) selon le plan YZ d'une pièce fabriquée à partir d'un mélange de particules d'un alliage d'aluminium 6061 et de 1,9% massique de particules de ZrSi₂, selon un mode de réalisation particulier de l'invention.

### EXPOSÉ DÉTAILLÉ DE MODES DE RÉALISATION PARTICULIERS

Le procédé de fabrication d'une pièce en alliage d'aluminium par fabrication additive comprend les étapes successives suivantes :
a) fournir un mélange de poudres comprenant, et de préférence constitué par :
   - une première poudre comprenant des premières particules 10 en un premier matériau comprenant au moins 80% massique d'aluminium et jusqu'à 20% massique d'un ou plusieurs éléments additionnels,
   - une deuxième poudre comprenant des deuxièmes particules 20 en un deuxième matériau, le deuxième matériau étant ZrSi₂,
b) former une couche du mélange de poudres,
c) faire fondre localement la couche du mélange de poudres, de préférence, par balayage d'un faisceau laser ou par balayage d'un faisceau d'électrons, de manière à former successivement une pluralité de zones fondues,
d) refroidir la pluralité de zones fondues à l'étape c) de manière à former une pluralité de zones solidifiées, cette pluralité de zones solidifiées étant constitutive des premiers éléments des pièces à construire.

Avantageusement, les étapes b), c) et d) peuvent être répétées au moins une fois de manière à former au moins une autre zone solidifiée sur la première zone solidifiée. Le procédé se répète jusqu'à obtenir la forme finale de la pièce. La première couche de mélange de poudres est formée sur un substrat.

L'ajout de particules 20 de ZrSi₂ aux premières particules 10 d'intérêt à base d'aluminium permet d'obtenir une structure de solidification principalement équiaxe et une pièce finale en alliage d'aluminium sans fissuration.

De préférence, les premières particules 10 sont fonctionnalisées par les deuxièmes particules 20, par exemple par greffage électrostatique.

De préférence, les deuxièmes particules 20 sont constituées de ZrSi₂.

La deuxième poudre de ZrSi₂ représente, de préférence, de 1,8% à 4% massique du mélange de poudres. Autrement dit, le mélange de poudres comprend de 1,8% à 4% massique de deuxièmes particules et de 96% à 98,2% massique de premières particules. La deuxième poudre de ZrSi₂ représente, encore plus préférentiellement, de 1,9% à 2,5% massique du mélange de poudres. Autrement dit, le mélange de poudres comprend de 1,9% à 2,5% massique de deuxièmes particules et de 97,5% à 98,1% massique de premières particules.

Selon un mode de réalisation avantageux, les premières particules 10 ont une plus grande dimension allant de 10µm à 120µm et de préférence de 20µm à 65µm.

Avantageusement, les deuxièmes particules 20 ont une plus grande dimension allant de 50nm à 5000nm et, de préférence de 100nm à 1000nm, encore plus préférentiellement de 400nm à 600nm.

Les premières particules 10 et les deuxièmes particules 20 peuvent être par exemple, des éléments pouvant être de forme sphérique, ovoïde ou allongée. De préférence, les particules sont sensiblement sphériques et leur plus grande dimension est leur diamètre.

La première poudre est formée de premières particules 10 en un premier matériau. Le premier matériau comprend au moins 80% massique d'aluminium, et de préférence au moins 90% massique d'aluminium.

Les premières particules 10 peuvent comprendre jusqu'à 20% et de préférence jusqu'à 10% massique d'un ou plusieurs éléments additionnels (aussi appelés éléments d'alliage). Ces éléments sont, de préférence, choisis parmi le zinc, le magnésium, le cuivre, le silicium, le fer, le manganèse, le titane, le vanadium, le bismuth, le plomb, le nickel, le zirconium et le chrome.

De préférence, l'alliage est l'alliage d'aluminium 7075, l'alliage 2024, l'alliage 2219 ou l'alliage d'aluminium 6061.

Le mélange de poudres fourni à l'étape a) est réalisé en amont du procédé de fabrication additive.

Dans un mode préférentiel de mise en oeuvre de l'invention, la première poudre et la deuxième poudre sont mélangées au mélangeur dynamique 3D, par exemple avec un mélangeur Turbula^{®}. Alternativement, il pourrait s'agir d'un procédé de mécano-synthèse.

Lors de l'étape c), on utilise un faisceau suffisamment énergétique pour faire fondre au moins les premières particules 10.

La couche déposée peut être localement fondue ou totalement fondue.

L'étape de fusion permet de créer des motifs fondus dans la couche du mélange de poudres. Une ou plusieurs zones de particules fondues peuvent être réalisées pour former le motif désiré. Les particules 10 formant le motif fondent complètement de manière à conduire, lors de la solidification (étape d), à une ou plusieurs zones solidifiées en un alliage d'aluminium.

Avantageusement, les étapes b), c) et d) peuvent être répétées au moins une fois de manière à former au moins une autre zone solidifiée sur la première zone solidifiée. Le procédé se répète jusqu'à obtenir la forme finale de la pièce.

Les poudres non solidifiées sont ensuite évacuées et la pièce finale est détachée du substrat.

La pièce obtenue, selon l'un de ces procédés, peut être soumise à une étape de recuit (traitement thermique) pour réduire les contraintes internes et améliorer les propriétés mécaniques.

Selon une première variante de réalisation, il s'agit d'un procédé de Fusion Laser sur Lit de Poudre (FLLP, également connu sous les dénominations anglaises de PBF, « Powder Bed Fusion » et par abus de langage SLM « Selective Laser Melting »). A titre illustratif et non limitatif, les paramètres du procédé de fabrication par fusion laser sur lit de poudre sont :
- entre 50 et 500W pour la puissance laser,
- entre 100 et 2000 mm/s pour la vitesse laser,
- entre 25 et 120µm pour la distance entre deux espaces vecteurs (« hatch » en terminologie anglo-saxone),
- entre 15 et 60µm pour l'épaisseur de couche.

Selon une autre variante de réalisation, il s'agit d'un procédé de fusion par faisceau d'électrons sur lit de poudre (EBM). A titre illustratif et non limitatif, les paramètres du procédé de fabrication par fusion par faisceau d'électrons sur lit de poudre sont :
- entre 50 et 3000W pour le faisceau d'électrons,
- entre 100 et 8000 mm/s pour la vitesse du faisceau,
- entre 50 et 200µm pour la distance entre deux espaces vecteurs,
- entre 30 et 150µm pour l'épaisseur de couche.

Les machines de dépôt utilisées pour les procédés de fabrication additive comprennent, par exemple, un système d'alimentation en poudre (« powder delivery system »), un dispositif d'étalement et d'homogénéisation de la surface de la poudre (« Roller » ou « Blade »), un faisceau (par exemple un faisceau laser infrarouge à une longueur d'onde de 1060nm environ), un scanner pour diriger le faisceau, et un substrat (aussi appelé plateau) qui peut descendre verticalement (selon un axe Z perpendiculaire au lit de poudre).

L'ensemble peut être confiné dans une enceinte thermiquement fermée et inertée, pour contrôler l'atmosphère, mais aussi pour éviter la dissémination des poudres.

Bien que cela ne soit aucunement limitatif, l'invention trouve particulièrement des applications dans le domaine de l'aéronautique, dans le domaine de l'automobile.

### Exemples illustratifs et non limitatifs d'un mode de réalisation :

Dans cet exemple, des pièces en forme de cube de dimensions 10mm^{∗}10mm^{∗}10mm sont fabriquées par impression par SLM.

La pièce est obtenue à partir d'un mélange de deux poudres : une poudre d'alliage d'aluminium et une poudre de ZrSi₂.

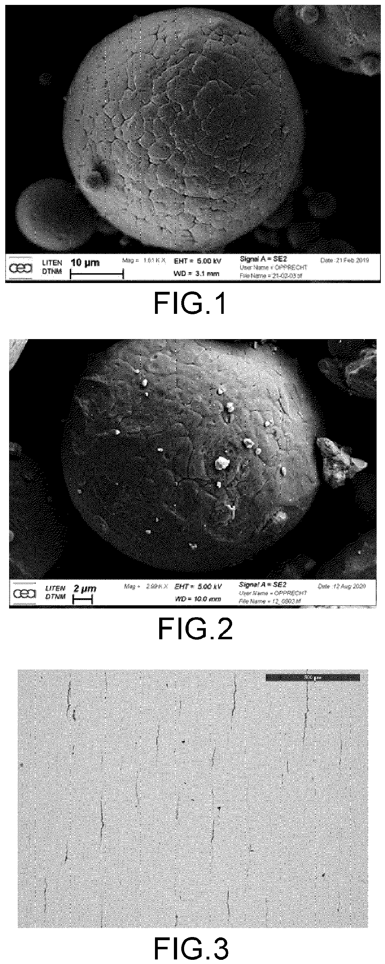

La granulométrie de la poudre d'alliage d'aluminium (Al6061), mesurée par granulométrie laser sur un dispositif Mastersizer 2000 de Malvern Panalytical, est la suivante : d₁₀=27,5µm, d₅₀=41,5µm et d₉₀=62,7µm. La poudre a été observée au MEB (figure 1).

Concernant la poudre de ZrSi₂, sa granulométrie est autour de 500nm.

Le mélange des deux poudres est réalisé en boîte à gant à partir de : 1200mL de la poudre d'alliage d'aluminium à raffiner, 17mL de la poudre de ZrSi₂ (mélange à 1,4% volumique, ce qui représente 1,9% massique), et de 250mL de billes de zircone de diamètre 5mm, utilisées pour homogénéiser le mélange. Le volume du pot de mélange est de 6,5L.

Le taux de remplissage, défini comme le rapport du volume représenté par les particules 10, les particules 20 et les billes de zircone sur le volume du pot de mélange, est environ de 23%.

Le mélange est passé au mélangeur dynamique 3D, par exemple au Turbula^{®}, pendant 10h.

Le mélange est ensuite rentré en boîte à gants pour être tamisé grossièrement (1mm) afin de récupérer les billes de zircone.

Le mélange de poudres a été observé au MEB (figure 2). Les particules d'alliage d'aluminium 6061 apparaissent en gris et les particules de ZrSi₂ en blanc.

Le mélange de poudre est ensuite utilisé pour fabriquer des pièces par impression 3D.

A titre illustratif, les conditions SLM permettant d'obtenir les cubes les plus denses sont les suivantes : puissance laser : 189-270W ; vitesse laser : 400-800mm/s, espace vecteur : 100µm ; épaisseur de couche (lit de poudre): 20µm.

A titre de comparaison, une pièce en aluminium est fabriquée sans ajouter de poudres de ZrSi₂.

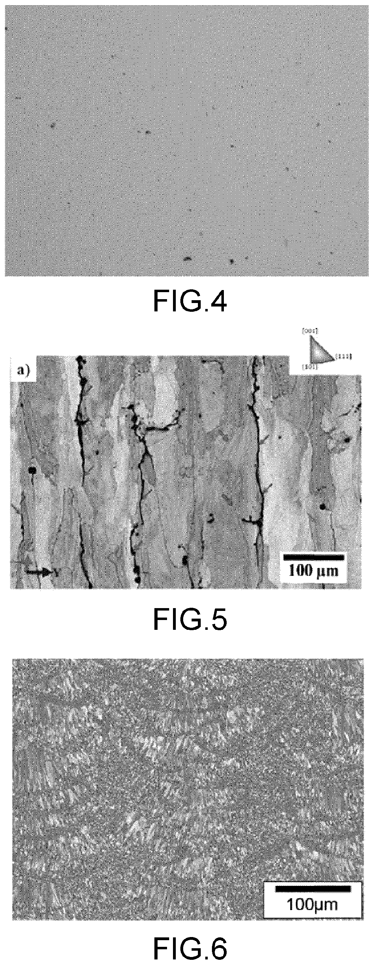

La pièce fabriquée uniquement avec la poudre d'aluminium (figure 3) présente des fissures. La pièce obtenue avec le mélange de poudres contenant 1,9% massique de poudres de ZrSi₂ est une pièce dense (>99%) dépourvue de fissures (figure 4).

La pièce fabriquée sans ajouter de poudre de ZrSi₂ et celle fabriquée avec 1,9% massique de ZrSi₂ ont été caractérisées par diffraction d'électrons rétrodiffusés (figures 5 et 6 respectivement) : l'ajout de 1,9% massique de ZrSi₂ conduit à un raffinement de la microstructure, permettant d'éviter le problème de fissuration à chaud.

### REFERENCES

[1] Stemmer et al. "Thermodynamic considerations in the stability of binary oxides for alternative gate dielectrics in complementary metal-oxide-semiconductors" J. Vac. Sci. Technol. B 22 (2004), 791.
[2] Clouet et al. "Nucleation of Al 3 Zr and Al 3 Sc in aluminum alloys: From kinetic Monte Carlo simulations to classical theory", Phys. Rev. B 69 (2004), 064109.
[3] Knipling et al. "Nucleation and Precipitation Strengthening in Dilute Al-Ti and Al-Zr Alloys" Metall and Mat Trans A 38 (2007), 2552-2563.

## Revendications

1. Procédé de fabrication d'une pièce en alliage d'aluminium par fabrication additive comprenant une étape au cours de laquelle une couche d'un mélange de poudres est localement fondue puis solidifiée, **caractérisé en ce que** le mélange de poudres comprend :
- des premières particules (10) comprenant au moins 80% massique d'aluminium et jusqu'à 20% massique d'un ou plusieurs éléments additionnels, et
- des deuxièmes particules (20) en ZrSi₂,
le mélange de poudres comprenant de 1,8% à 4% massique de deuxièmes particules.

2. Procédé selon la revendication précédente, **caractérisé en ce que** le mélange de poudres comprend de 1,9% à 2,5% massique de deuxièmes particules.

3. Procédé selon l'une quelconque des revendications précédentes, **caractérisé en ce que** les deuxièmes particules (20) ont une plus grande dimension allant de 50nm à 5000nm.

4. Procédé selon la revendication précédente, **caractérisé en ce que** les deuxièmes particules (20) ont une plus grande dimension allant de 100nm à 1000nm, et encore plus préférentiellement de 400 nm à 600nm.

5. Procédé selon l'une quelconque des revendications précédentes, **caractérisé en ce que** les premières particules (10) ont une plus grande dimension allant de 10µm à 120µm, et de préférence de 20µm à 65µm.

6. Procédé selon l'une quelconque des revendications précédentes, **caractérisé en ce que** les éléments additionnels sont choisis parmi Cu, Si, Zn, Mg, Fe, Ti, Mn, Zr, Va, Ni, Pb, Bi et Cr.

7. Procédé selon l'une quelconque des revendications précédentes, **caractérisé en ce que** l'alliage d'aluminium est l'alliage 7075, l'alliage 6061, l'alliage 2219 ou l'alliage 2024.

8. Procédé selon l'une quelconque des revendications précédentes, **caractérisé en ce que** le procédé de fabrication est un procédé de fusion sélective par laser ou un procédé de fusion sélective par faisceau d'électrons.

9. Procédé selon l'une quelconque des revendications précédentes, **caractérisé en ce que** le mélange de poudres est réalisé dans un mélangeur dynamique 3D.
